# EUROPÄISCHE PATENTSCHRIFT

(11) **EP 3 946 994 B1**
(45) Veröffentlichungstag und Bekanntmachung des Hinweises auf die Patenterteilung: **05.06.2024**
(21) Anmeldenummer: 20717138.0
(22) Anmeldetag: 01.04.2020
(51) Int. Cl.: B60K 1/00, H01R 4/30, H01R 4/00, H01R 3/00

(54) **VERFAHREN ZUM HERSTELLEN EINER TOLERANZAUSGEGLICHENEN VERBINDUNG ZWISCHEN EINEM ERSTEN BAUTEIL UND EINEM ZWEITEN BAUTEIL UND ELEKTRISCHER ANTRIEB**
METHOD FOR PRODUCING A TOLERANCE-COMPENSATED CONNECTION BETWEEN A FIRST COMPONENT AND A SECOND COMPONENT, AND ELECTRIC DRIVE
PROCÉDÉ POUR L'ÉTABLISSEMENT D'UNE CONNEXION COMPENSÉE EN TOLÉRANCE ENTRE UN PREMIER COMPOSANT ET UN DEUXIÈME COMPOSANT ET ENTRAÎNEMENT ÉLECTRIQUE

(30) Priorität: 02.04.2019 DE 102019204636; 10.09.2019 DE 102019213700
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: RANG, Oliver, 34132 Kassel (DE); SCHNEIDER, Tobias, 33102 Paderborn (DE); LERCH, Alexander, 34327 Körle (DE); PRIES, Marcel, 34225 Baunatal (DE)
(86) Internationale Anmeldenummer: PCT/EP2020/059255
(87) Internationale Veröffentlichungsnummer: WO 2020/201354

(56) Entgegenhaltungen:
- DE-A1-102008 054 992
- DE-A1-102012 215 954
- US-A1- 2013 285 444
- US-B2- 7 993 155
- US-B2- 9 132 724

## Beschreibung

Die Erfindung betrifft ein Verfahren zum Herstellen einer toleranzausgeglichenen Verbindung zwischen einem ersten Bauteil und einem zweiten Bauteil sowie einen elektrischen Antrieb.

Grundsätzlich ist beim Verbinden von zwei Bauteilen ein Toleranzausgleich erstrebenswert, da es üblich ist, dass die Bauteile aufgrund von Toleranzen unterschiedlich ausfallen. Dabei ist der Toleranzausgleich jedoch teilweise sehr aufwendig und teuer. Typischerweise werden die Toleranzen ausgemessen und mit Distanzscheiben ausgeglichen (sogenanntes "Ausscheiben"). Andere Möglichkeiten zum Toleranzausgleich, bspw. mittels Federelementen, bringen technische Nachteile mit sich. Vor allem können mechanische Kräfte (Spannungen) in die Bauteile eingeleitet werden, was zu einer Beschädigung der Bauteile führen kann, beispielsweise zum Bruch von Schweißnähten.

Die DE 10 2012 215 954 A1 beschreibt eine elektrische Kontaktvorrichtung, insbesondere einen Steckverbinder.

Die DE 10 2008 054 992 A1 offenbart einen Kontaktierungsverbinder, während die US 2013/285 444 A1 eine Kupplung zwischen einer austauschbaren Batterie und einem Fahrzeug beschreibt.

Die US 7 993 155 B2 beschreibt ein System zum elektrischen Verbinden von Batterien an elektrischen Fahrzeugen.

Die Aufgabe der vorliegenden Erfindung liegt darin, ein Verfahren zum Herstellen einer toleranzausgeglichenen Verbindung zwischen einem ersten und einem zweiten Bauteil derart zu verbessern, dass elektrische Kontakte der Bauteile spannungsarm, vor allem spannungsfrei, aufeinander liegen, sodass keine Kräfte beziehungsweise Spannungen in die Bauteile geleitet werden, wobei das Verfahren ferner kostengünstig sein soll. Ferner soll ein elektrischer Antrieb entsprechend verbessert werden.

Gelöst wird die oben genannte Aufgabe durch ein Verfahren zum Herstellen einer toleranzausgeglichenen Verbindung zwischen einem ersten Bauteil und einem zweiten Bauteil nach Anspruch 1. Dadurch wird erreicht, dass nur geringe bzw. keine mechanischen Kräfte und/oder Spannungen in die Bauteile eingeleitet werden.

Unter dem Begriff "bewegen" ist insbesondere ein Verfahren, in anderen Worten ein Verschieben, des ersten Bauteils gemeint. Vor allem bezieht sich der Begriff auf eine Positionierung. Die Bewegung findet ausschließlich in erster Richtung statt. In anderen Worten hat die Bewegung keine Komponente in einer anderen Richtung als der ersten Richtung. In anderen Worten wird das erste Bauteil geradlinig in erster Richtung bewegt, und zwar bis elektrische Kontakte des ersten Bauteils mit elektrischen Kontakten des zweiten Bauteils anliegen.

Es werden nur geringe Kräfte in die Bauteile eingeleitet. Es wird das erste Bauteil nur solange in erster Richtung bewegt, bis ein Kontakt zwischen den elektrischen Kontakten des ersten Bauteils und den elektrischen Kontakten des zweiten Bauteils hergestellt wird, ohne dass die Kontakte gegeneinander "drücken".

Insbesondere überlappen die elektrischen Kontakte des ersten Bauteils und die elektrischen Kontakte des zweiten Bauteils in einer zweiten Richtung, die senkrecht zur ersten Richtung steht, sodass bei einer entsprechenden Bewegung des ersten Bauteils relativ zum zweiten Bauteil in die erste Richtung die elektrischen Kontakte des ersten Bauteils in Kontakt mit den elektrischen Kontakten des zweiten Bauteils treten können.

Vorzugsweise handelt es sich bei der toleranzausgeglichenen Verbindung auch um eine elektrische Verbindung. Vorteilhafterweise handelt es sich bei den Bauteilen um Bauteile zum Einsatz in der Automobilindustrie, Bahnindustrie und/oder Schifffahrt und/oder Raumfahrt und/oder Werkzeugindustrie und/oder Werkzeugmaschinenindustrie. Vor allem handelt es sich um Bauteile für Baumaschinen. Insbesondere handelt es sich bei dem ersten Bauteil um einen Pulswechselrichter, insbesondere für einen elektrischen Antrieb, vor allem eines Fahrzeuges. Es kann sich bei dem ersten Bauteil um die gesamte Leistungselektronik eines elektrischen Antriebs, insbesondere inklusive eines AC-Moduls, handeln. Alternativ kann es sich bei dem ersten Bauteil um ein Modul, insbesondere ein AC-Modul, handeln, während die Leistungselektronik dann ein drittes Bauteil darstellt.

Bei dem zweiten Bauteil handelt es sich vorteilhafterweise um einen Stator, insbesondere für einen elektrischen Antrieb, insbesondere eines Fahrzeuges.

Vorteilhafterweise wird das erste Bauteil mittels einer Maschine oder manuell bewegt. Bei der Maschine handelt es sich insbesondere um eine Lineareinheit und/oder einen Roboter. Vorzugsweise wird das erste Bauteil um eine erste Strecke bewegt, bis die elektrischen Kontakte des ersten Bauteils an den elektrischen Kontakten des zweiten Bauteils anliegen. Bei der ersten Strecke handelt es sich insbesondere um den notwendigen Verfahrweg, bis die elektrische Kontakte in Kontakt kommen. Die erste Strecke wird dabei insbesondere durch Ausmessen, insbesondere optisches Ausmessen mittels einer Kamera, und/oder eine Kraft-Weg-Regelung und/oder akustisch und/oder durch die Ermittlung eines elektrischen Übergangswiderstandes ermittelt. Ferner kann zuverlässig bestimmt werden, ob die elektrischen Kontakte in richtigem Kontakt zueinander sind.

Unter dem Begriff "Kraft-Weg-Regelung" ist insbesondere eine Kraftregelung zu verstehen, mit welcher bestimmt wird, mit welcher Kraft die elektrischen Kontakte des ersten Bauteils an den Kontakten des zweiten Bauteils anliegen. Sobald dabei ein Kontakt, das heißt ein entsprechender Widerstand, festgestellt wird, wird die Bewegung des ersten Bauteils gestoppt, sodass die Kontakte spannungsfrei aufeinander liegen. Beim Ausmessen werden insbesondere die Positionen der Kontakte des ersten Bauteils und des zweiten Bauteils zueinander bestimmt. Bei einer akustischen Ermittlung wird insbesondere ein hörbarer Anschlag der Kontakte festgestellt.

Vorteilhafterweise kann das Verfahren ein Bewegen des ersten Bauteils relativ zum zweiten Bauteil in eine zweite Richtung umfassen, und zwar bis mindestens eine Bohrung des ersten Bauteils über mindestens einer Bohrung des zweiten Bauteils liegt, wobei die zweite Richtung senkrecht zur ersten Richtung steht. Ein "Übereinanderliegen" wird bereits dann erreicht, wenn die Bohrungen derart überlappen, dass eine Schraube eingebracht werden kann. Die Bewegung findet ausschließlich in zweiter Richtung statt. In anderen Worten hat die Bewegung keine Komponente in einer anderen Richtung als der zweiten Richtung. In anderen Worten wird das erste Bauteil geradlinig in zweiter Richtung bewegt.

Insbesondere umfasst jedes Bauteil mehrere, vorzugsweise zwei oder drei, elektrische Kontakte. Jeder Kontakt weist vorzugsweise eine Bohrung auf, wobei das Bewegen des ersten Bauteils in zweiter Richtung dazu dient, Bohrungen des ersten Bauteils über Bohrungen dieses zweiten Bauteils anzuordnen.

Insbesondere stehen die elektrischen Kontakte des ersten Bauteils und/oder die elektrischen Kontakte des zweiten Bauteils von dem jeweiligen Bauteil in Richtung des anderen Bauteils ab. Die Kontakte sind vorzugsweise parallel zueinander ausgerichtet. Die elektrischen Kontakte sind insbesondere plattenförmig ausgebildet und erstrecken sich vorteilhafterweise in zweiter Richtung und einer dritten Richtung, die senkrecht zur ersten Richtung und zur zweiten Richtung steht. Vor allem sind die Kontakte stegförmig ausgebildet. Insbesondere können die Kontakte als Kontaktschienen ausgebildet sein. Die Länge der Kontakte erstreckt sich vor allem in zweiter Richtung, während sich deren Breite in dritter Richtung erstreckt. Die Tiefe der elektrischen Kontakte erstreckt sich in erster Richtung. In anderen Worten wird das erste Bauteil bei einer Bewegung in zweiter Richtung in Richtung des zweiten Bauteils abgesenkt. Die elektrischen Kontakte des ersten Bauteils können derart abgewinkelt sein, dass deren Bohrungen auf einer gedachten Kreislinie liegen. Dies dient dem Anschluss an das zweite Bauteil, das zylinderförmig ausgebildet sein kann.

Das Verfahren kann das Einbringen des zweiten Bauteils in ein Gehäuse und die Herstellung einer Verbindung mit dem Gehäuse umfassen.

Vor der erfindungsgemäßen Bewegung in erster Richtung kann zuvor noch mindestens eine weitere Bewegung stattfinden. Bspw. kann das Verfahren umfassen, dass das erste Bauteil in zweiter Richtung bewegt wird. Ferner kann das Verfahren umfassen, dass das erste Bauteil in erster Richtung bewegt wird, wobei bei dieser vorangehenden Bewegung in erster Richtung noch nicht erreicht wird, dass elektrische Kontakte des ersten Bauteils an elektrischen Kontakten des zweiten Bauteils anliegen. Mithilfe dieser mindestens einen vorangehenden Bewegung kann das erste Bauteil grob zum zweiten Bauteil positioniert werden. Insbesondere wird das erste Bauteil in erster Richtung solange bewegt, bis elektrische Kontakte des ersten Bauteils in erster Richtung in unmittelbarer Nähe zu elektrischen Kontakten des zweiten Bauteils angeordnet sind. Hierunter ist vorzugsweise zu verstehen, dass die elektrischen Kontakte der Bauteile einen Abstand in erster Richtung von weniger als 5 mm, weiter bevorzugt weniger als 3 mm, am meisten bevorzugt weniger als 2 mm, aufweisen. Insbesondere beträgt der Abstand etwa 1,5 mm. Dabei können die elektrischen Kontakte in zweiter Richtung versetzt angeordnet sein, müssen sich demnach nicht gegenüberstehen.

Vorteilhafterweise weist das erste Bauteil mindestens eine, insbesondere zwei oder drei, längliche Durchbrechungen zum Führen des ersten Bauteils bei einer Bewegung in erster Richtung auf. Insbesondere sind die Durchbrechungen beim Einbau des ersten Bauteils in ein Gehäuse eines elektrischen Antriebs länglich in erster Richtung ausgebildet. Bevorzugterweise sind die Durchbrechungen oval ausgebildet, wobei deren längere Achse in die erste Richtung zeigt.

Als weiteren vorangehenden Schritt kann das Verfahren umfassen, dass das erste Bauteil in zweiter Richtung bewegt wird, bis das erste Bauteil und das Gehäuse in zweiter Richtung in unmittelbarer Nähe zueinander angeordnet sind. Hierunter ist vorzugsweise zu verstehen, dass das erste Bauteil und das Gehäuse, insbesondere eine entsprechende Auflagefläche des Gehäuses, einen Abstand in zweiter Richtung von weniger als 5 mm, weiter bevorzugt weniger als 3 mm, am meisten bevorzugt weniger als 2 mm, aufweisen. Insbesondere beträgt der Abstand etwa 1,5 mm. Durch diese Bewegung des ersten Bauteils können in das Gehäuse eingebrachte Stifte in die Durchbrechungen des ersten Bauteils gebracht werden.

Nun kann der Schritt des Bewegens des ersten Bauteils relativ zum zweiten Bauteil in die erste Richtung erfolgen, und zwar wird das erste Bauteil nur solange in erster Richtung bewegt, bis ein Kontakt zwischen den elektrischen Kontakten des ersten Bauteils und den elektrischen Kontakten des zweiten Bauteils hergestellt wird und diese aneinander anliegen. Diese Bewegung wird nun insbesondere mithilfe des Eingriffs der Stifte in die Bohrungen ausgeführt. Somit ist die Bewegung geführt. Der Abstand zwischen den elektrischen Kontakten beträgt als Resultat Null in erster Richtung. Anschließen kann sich ein Bewegen des ersten Bauteils relativ zum zweiten Bauteil in eine zweite Richtung, und zwar bis das erste Bauteil auf dem Gehäuse bzw. einer entsprechenden Auflagefläche aufliegt.

Bevorzugterweise findet jede der obigen Bewegungen geradlinig statt, d.h. ausschließlich in die genannte Richtung ohne Bewegungsanteile in andere Richtungen. Insbesondere wird bei einer relativen Bewegung in absoluter Hinsicht nur das erste Bauteil bewegt. Ferner kann das dritte Bauteil beweglich oder unbeweglich zum zweiten Bauteil ausgebildet sein.

Das Verfahren umfasst erfindungsgemäß das Herstellen einer lösbaren, insbesondere elektrischen, Verbindung zwischen den elektrischen Kontakten des ersten Bauteils und den elektrischen Kontakten des zweiten Bauteils. Ferner kann das Verfahren das Herstellen einer lösbaren, insbesondere elektrischen, Verbindung zwischen den elektrischen Kontakten des ersten Bauteils und den elektrischen Kontakten des dritten Bauteils zur Kontaktierung der Kontakte umfassen. Insbesondere wird das erste Bauteil nach der Bewegung in zweiter Richtung fixiert. Insbesondere kann eine lösbare Verbindung zwischen den jeweiligen Kontakten hergestellt werden, insbesondere durch Schrauben, Kleben, Nieten, Klemmen, Löten, Sintern, Schweißen und/oder andere Befestigungsverfahren.

Insbesondere umfasst das Verfahren das Einbringen von Schrauben in die übereinander liegenden Bohrungen des ersten Bauteils und des zweiten Bauteils und/oder des ersten Bauteils und des dritten Bauteils. Vorteilhafterweise werden die Schrauben derart in die Bohrungen eingebracht, dass sich deren Längsrichtung in erster oder zweiter Richtung erstreckt.

Vor allem entspricht die erste Richtung der axialen Richtung des zweiten Bauteils, während die zweite Richtung der radialen Richtung des zweiten Bauteils entsprechen kann.

Es kann ein Durchmesser der mindestens einen Bohrung des ersten Bauteils und/oder ein Durchmesser der mindestens einen Bohrung des zweiten Bauteils und/oder ein Durchmesser der mindestens einen Bohrung des dritten Bauteils größer ausgebildet sein als ein Schaftdurchmesser der Schrauben. Insbesondere entspricht der Durchmesser der mindestens einen Bohrung des ersten Bauteils und/oder der Durchmesser der mindestens einen Bohrung der zweiten Bauteils und/oder ein Durchmesser der mindestens einen Bohrung des dritten Bauteils mindestens dem 1,15-fachen, insbesondere mindestens dem 1,5-fachen, am meisten bevorzugt mindestens dem 1,33-fachen, des Schaftdurchmessers der Schrauben.

Ferner kann ein Durchmesser der mindestens einen Bohrung des ersten Bauteils und/oder ein Durchmesser der mindestens einen Bohrung des zweiten Bauteils und/oder ein Durchmesser der mindestens einen Bohrung des dritten Bauteils kleiner ausgebildet sein als ein Kopfdurchmesser eines Schraubenkopfes der Schrauben. In anderen Worten überdeckt der Schraubenkopf somit stets die Bohrung.

Das Obige trifft vor allem für alle Bohrungen der elektrischen Kontakte des ersten Bauteils und/oder alle Bohrungen der elektrischen Kontakte des zweiten Bauteils zu.

Dadurch, dass die Schrauben einen relativ kleinen Schaftdurchmesser im Vergleich zur Bohrung haben, wird ein Toleranzausgleich sowohl in zweiter Richtung als auch in dritter Richtung, in positiver als auch negativer Richtung, erreicht.

Das Verfahren kann ferner das Herstellen einer lösbaren Verbindung zwischen dem dritten Bauteil und dem ersten Bauteil umfassen, wobei die Verbindung wie oben beschrieben toleranzausgeglichen mittels der Schrauben ausgebildet wird. Zwischen dem ersten und dem zweiten Bauteil und/oder zwischen dem dritten Bauteil und dem ersten Bauteil wird somit eine toleranzausgeglichene Verbindung hergestellt.

Ferner kann das Verfahren das Schließen eines Abschlussdeckels und das Absenken eines Gehäusedeckels in erster Richtung umfassen.

Insgesamt werden die elektrischen Kontakte des ersten Bauteils und des zweiten Bauteils ohne das Einleiten von Kräften bzw. Spannungen gefügt, da die Kontakte spannungsarm, insbesondere spannungsfrei, aufeinander liegen. Somit werden keine Kräfte in die Bauteile eingeleitet. Toleranzen in erster Richtung werden somit ausgeglichen. Ferner wird durch die entsprechende Dimensionierung der mindestens einen Bohrung des ersten Bauteils und der mindestens einen Bohrung des zweiten Bauteils im Vergleich zum Schaftdurchmesser und/oder durch die entsprechende Dimensionierung der mindestens einen Bohrung des dritten Bauteils und mindestens einer Bohrung des ersten Bauteils im Vergleich zum Schaftdurchmesser ferner ein Toleranzausgleich in zweiter Richtung und dritter Richtung erreicht.

In einem weiteren Aspekt betrifft die Erfindung einen elektrischen Antrieb, insbesondere eines Fahrzeuges, mit einem ersten Bauteil und einem zweiten Bauteil, wobei zwischen dem ersten Bauteil und dem zweiten Bauteil eine oben beschriebene toleranzausgeglichene Verbindung hergestellt ist. Dabei ist das erste und/oder das zweite Bauteil insbesondere wie oben beschrieben ausgebildet.

Ferner kann der Antrieb ein drittes Bauteil umfassen, das vor allem wie oben beschrieben ausgebildet ist. Insbesondere sind zwischen den Kontakten des ersten Bauteils und den Kontakten des zweiten Bauteils und/oder zwischen den Kontakten des ersten Bauteils und den Kontakten des dritten Bauteils eine lösbare Verbindung, vorzugsweise wie oben beschrieben, hergestellt.

Ausführungsbeispiele der Erfindung werden anhand der folgenden rein schematischen Figuren näher erläutert: Es zeigen:
- Figur 1:: ein Verfahrensschema eines erfindungsgemäßen Verfahrens;
- Figur 2:: eine perspektivische Ansicht eines ersten Bauteiles und eines zweiten Bauteiles;
- Figur 3:: eine Vergrößerung eines Ausschnitts der Figur 2;
- Figur 4:: eine Schnittdarstellung des ersten Bauteiles und des zweiten Bauteiles der Figur 2;
- Figur 5:: eine perspektivische Ansicht des ersten Bauteiles und des zweiten Bauteiles der Figuren 2 bis 4;
- Figur 6:: eine perspektivische Ansicht des ersten Bauteiles und des zweiten Bauteiles der Figuren 2 bis 5;
- Figur 7:: eine perspektivische Ansicht des ersten Bauteiles und des zweiten Bauteiles der Figuren 2 bis 6;
- Figur 8:: eine perspektivische Ansicht des ersten Bauteiles und des zweiten Bauteiles der Figuren 2 bis 7;
- Figur 9:: eine perspektivische Ansicht des ersten Bauteiles und des zweiten Bauteiles der Figuren 2 bis 8;
- Figur 10:: zwei Schnittdarstellungen der Bohrungen der elektrischen Kontakte des ersten Bauteiles sowie der Bohrungen der elektrischen Kontakte des zweiten Bauteiles der Figuren 1 bis 9 in drei Szenarien;
- Figur 11:: zwei Schnittdarstellungen der Bohrungen der elektrischen Kontakte des ersten Bauteiles sowie der Bohrungen der elektrischen Kontakte des zweiten Bauteiles der Figuren 1 bis 10 in drei Szenarien; und
- Figur 12:: eine perspektivische Ansicht eines ersten Bauteils;
- Figur 13:: eine perspektivische Ansicht eines elektrischen Antriebs eines Fahrzeuges;
- Figur 14:: eine perspektivische Ansicht des ersten Bauteils zusammen mit einer Schnittdarstellung des Gehäuses und des zweiten Bauteils gemäß Figur 13;
- Figur 15:: eine weitere perspektivische Ansicht des ersten Bauteils zusammen mit einer Schnittdarstellung des Gehäuses und des zweiten Bauteils gemäß Figur 13;
- Figur 16:: eine weitere perspektivische Ansicht des ersten Bauteils zusammen mit einer Schnittdarstellung des Gehäuses und des zweiten Bauteils gemäß Figur 13;
- Figur 17:: eine weitere perspektivische Ansicht des ersten Bauteils zusammen mit einer Schnittdarstellung des Gehäuses und des zweiten Bauteils gemäß Figur 13;
- Figur 18:: eine weitere perspektivische Ansicht des ersten Bauteils zusammen mit einer Schnittdarstellung des Gehäuses und des zweiten Bauteils gemäß Figur 13;
- Figur 19:: eine weitere perspektivische Ansicht des elektrischen Antriebs eines Fahrzeuges nach Figur 13; und
- Figur 20:: eine Draufsicht auf das dritte Bauteil, das erste Bauteil und das Gehäuse des Antriebs der Figur 19.

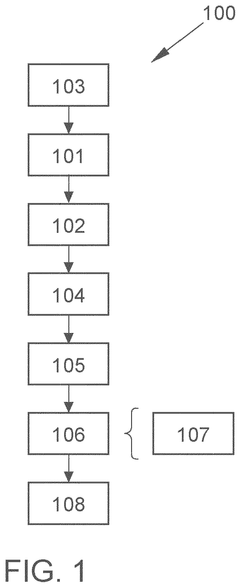

Figur 1 zeigt ein Verfahrensschema eines erfindungsgemäßen Verfahrens 100. Das Verfahren 100 umfasst das Bewegen 101 des ersten Bauteils 10 relativ zum zweiten Bauteil 14 in eine erste Richtung 40, und zwar bis elektrische Kontakte 11 des ersten Bauteils 10 an elektrischen Kontakten 15 des zweiten Bauteils 14 anliegen. Insbesondere wird das erste Bauteil 10 um eine erste Strecke 25 in erster Richtung 40 bewegt 102. Die erste Strecke 25 kann zuvor ermittelt werden 103, durch Ausmessen und/oder eine Kraft-Weg-Regelung.

Ferner kann das erste Bauteil 10 relativ zum zweiten Bauteil 14 in eine zweite Richtung 41 bewegt werden 104, und zwar bis Bohrungen 12 des ersten Bauteils 10 über entsprechenden Bohrungen 16 des zweiten Bauteils 14 liegen.

Das erste Bauteil 10 kann in der resultierenden Position relativ zum zweiten Bauteil 14 fixiert werden 105. Insbesondere wird dann eine lösbare Verbindung zwischen den elektrischen Kontakten 11 des ersten Bauteils 10 und den elektrischen Kontakten 15 des zweiten Bauteils 14 hergestellt 106. Dies wird insbesondere dadurch erreicht, dass Schrauben 18 in die übereinander liegenden Bohrungen eingebracht werden 107. Dabei ist der Durchmesser 13 der Bohrungen 12 des ersten Bauteils 10 und/oder der Durchmesser 17 der Bohrungen 16 des zweiten Bauteils 14 derart bemessen, dass dieser größer ist als ein Schaftdurchmesser 20 der Schrauben 18, jedoch kleiner als ein Kopfdurchmesser 22 der jeweiligen Schraubenköpfe 21. Auf diese Weise wird eine toleranzausgeglichene elektrische Verbindung zwischen dem ersten Bauteil 10 und dem zweiten Bauteil 14 hergestellt 108. Dabei betrifft der Toleranzausgleich sowohl die positive und negative zweite Richtung (41) als auch die positive und negative dritte Richtung (42).

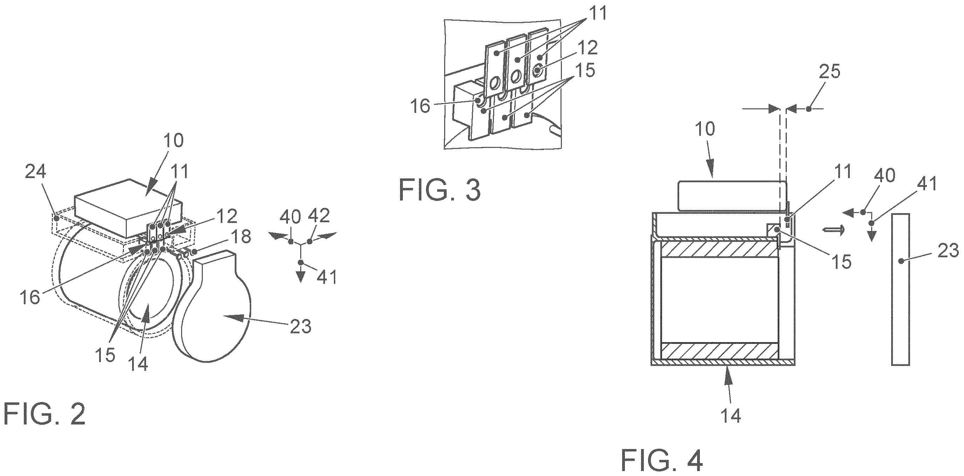

Figur 2 zeigt eine perspektivische Ansicht eines ersten Bauteils 10 und eines zweiten Bauteils 14. Bei dem ersten Bauteil 10 handelt es sich um die gesamte Leistungselektronik eines elektrischen Antriebs. Das erste Bauteil 10 weist drei elektrische Kontakte 11 auf, die in zweiter Richtung 41 vom ersten Bauteil 10 in Richtung des zweiten Bauteils 14 hervorstehen. Die elektrischen Kontakte der beiden Bauteile sind plattenförmig ausgebildet, in anderen Worten stegförmig, und erstrecken sich in zweiter Richtung 41 und dritter Richtung 42. Jeder elektrische Kontakt 11 weist eine Bohrung 12 auf. Das gleiche gilt für das zweite Bauteil 14, deren drei elektrische Kontakte 15 ebenfalls in Richtung des ersten Bauteils 10 vom zweiten Bauteil 14 hervorstehen. Die elektrischen Kontakte 15 des zweiten Bauteils 14 erstrecken sich in zweiter Richtung 41 und dritter Richtung 42. Auch sie weisen jeweils eine Bohrung 16 auf.

Ferner sind in Figur 2 Schrauben 18 zum Herstellen einer lösbaren Verbindung zwischen den elektrischen Kontakten der Bauteile sowie ein Abschlussdeckel 23 und ein Gehäuse 24 zum Abdecken der Bauteile zu sehen.

Figur 3 zeigt eine Vergrößerung eines Ausschnitts der Figur 2, in der die elektrischen Kontakte der Bauteile zu sehen sind. Deutlich sind die stegförmige Ausbildung der Kontakte und deren Bohrungen 12 bzw. 16 zu sehen.

Figur 4 zeigt eine Schnittdarstellung des ersten Bauteils 10 und des zweiten Bauteiles 14 der Figur 2. Der Schnitt erstreckt sich in erster Richtung 40 und zweiter Richtung 41. Die dritte Richtung 42 erstreckt sich in die Zeichenebene.

Deutlich ist in Figur 4 die erste Strecke 25 in erster Richtung 40 zu sehen, um die das erste Bauteil 10 in einem ersten Schritt in erster Richtung 40 bewegt werden muss, damit die elektrischen Kontakte 11 des ersten Bauteils 10 an den elektrischen Kontakten 15 des zweiten Bauteils 14 anliegen.

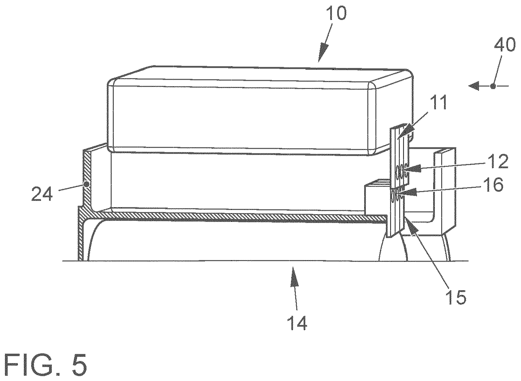

In Figur 5 ist eine perspektivische Ansicht des ersten Bauteils 10 und des zweiten Bauteils 14 der Figuren 2 bis 4 nach dem Bewegen des ersten Bauteils in erster Richtung 40 zu sehen. Die elektrischen Kontakte 11 des ersten Bauteils 10 liegen an den elektrischen Kontakten 15 des zweiten Bauteils 14 an.

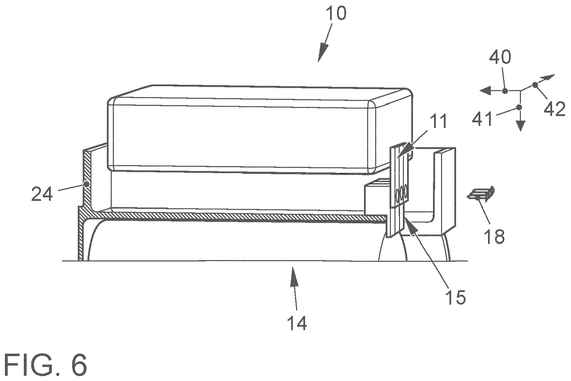

Figur 6 zeigt eine perspektivische Ansicht des ersten Bauteils 10 und des zweiten Bauteils 14 der Figuren 2 bis 5, wobei das erste Bauteil 10 in einem zweiten Schritt in zweiter Richtung 41 bewegt wurde, sodass die Bohrungen 12 der elektrischen Kontakte 11 des ersten Bauteiles 10 über den Bohrungen 16 der elektrischen Kontakte 15 des zweiten Bauteiles 14 liegen.

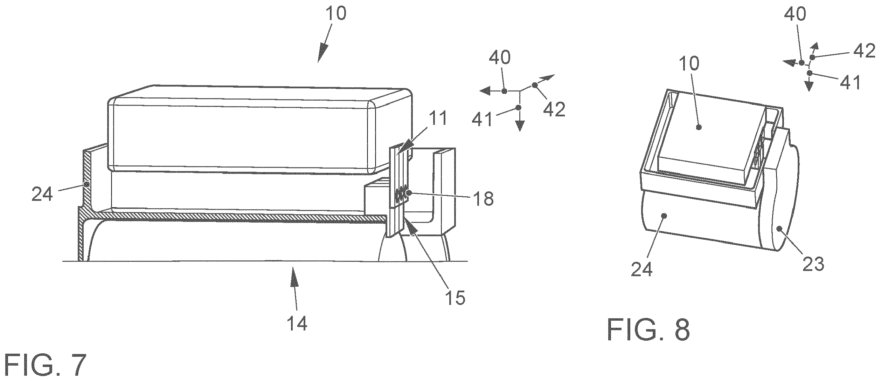

In Figur 7 ist eine perspektivische Ansicht des ersten Bauteils 10 und des zweiten Bauteils 14 der Figuren 2 bis 6 zu sehen, wobei eine lösbare Verbindung zwischen den elektrischen Kontakten 11 des ersten Bauteils 10 und den elektrischen Kontakten 15 des zweiten Bauteils 14 hergestellt wurde 106. Und zwar wurden Schrauben 18 in die übereinander liegenden Bohrungen des ersten Bauteils 10 und des zweiten Bauteils 14 eingebracht 107. Die Längsrichtung der Schrauben erstreckt sich in erster Richtung 40.

Figur 8 zeigt eine perspektivische Ansicht des ersten Bauteils 10 und des zweiten Bauteils 14 der Figuren 2 bis 7, wobei der Abschlussdeckel 23 in erster Richtung 40 bewegt und befestigt wurde.

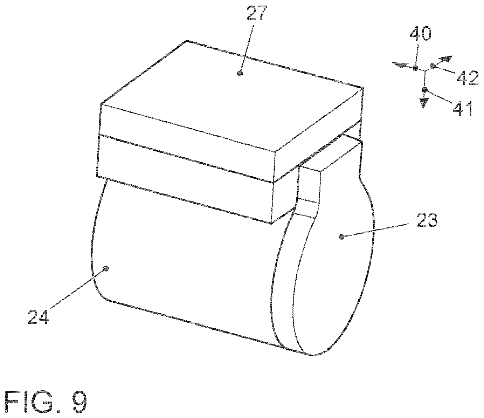

In Figur 9 ist eine perspektivische Ansicht des ersten Bauteils 10 und des zweiten Bauteils 14 der Figuren 2 bis 8 zu sehen, wobei ein Gehäusedeckel 27 in zweiter Richtung 41 bewegt und befestigt wurde.

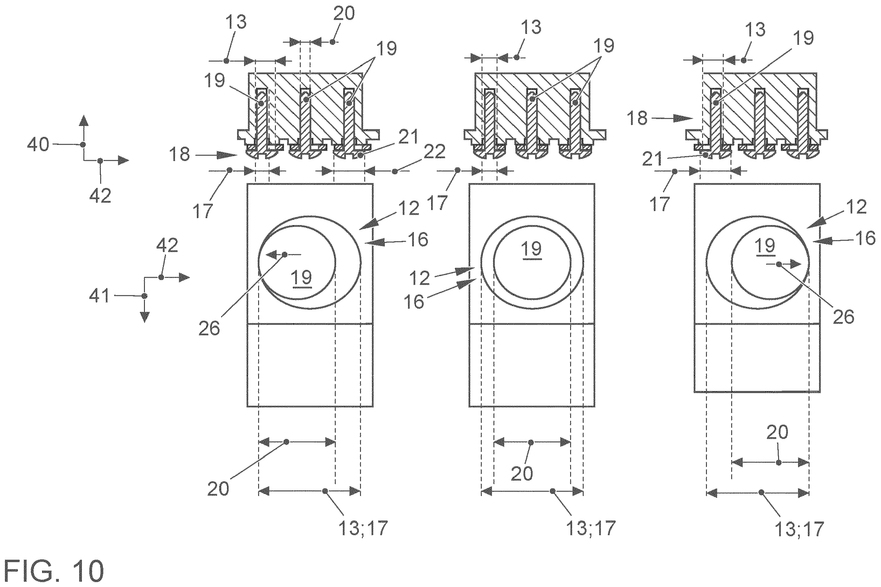

In Figur 10 sind zwei Schnittdarstellungen der Bohrungen 12 der elektrischen Kontakte 11 des ersten Bauteils 10 sowie der Bohrungen 16 der elektrischen Kontakte 15 des zweiten Bauteils 14 in drei Szenarien zu sehen. Dabei bildet Figur 10 in der oberen Zeile drei Schnittdarstellungen in erster Richtung 40 und dritter Richtung 42 ab, während in der unteren Zeile die dazugehörige Schnittdarstellung in zweiter Richtung 41 und dritter Richtung 42 zu sehen ist. Deutlich ist zu sehen, wie die Schrauben 18 mit deren Schraubenschaft 19 in erster Richtung 40 in die Bohrungen eingebracht sind.

Insgesamt zeigt Figur 10 drei Szenarien. In allen Szenarien ist zu sehen, wie der Durchmesser 13 der Bohrung 12 des ersten Bauteiles 10 und der Durchmesser 17 der Bohrungen 16 des zweiten Bauteiles 14 deutlich kleiner ausgebildet ist als der Schaftdurchmesser 20 der Schrauben 18, sodass die Schrauben 18 Toleranzen der Bauteile in dritter Richtung 42 ausgleichen können, indem sich diese, je nach Position der Bohrungen zueinander, entsprechend positionieren können, wie dies durch die Pfeile 26 dargestellt ist. Während somit das linke Szenario und das rechte Szenario zwei Extremlagen zeigen, zeigt das mittlere Szenario die nominale Lage, in dem die Bohrungen perfekt übereinanderliegen. Im linken Szenario hingegen sind die Bohrungen 12 des ersten Bauteils 10 im Vergleich zu den Bohrungen 15 des zweiten Bauteils aufgrund von Toleranzen nach rechts verschoben. Im rechten Szenario sind die Bohrungen 12 des ersten Bauteils 10 im Vergleich zu den Bohrungen 15 des zweiten Bauteils aufgrund von Toleranzen nach links verschoben. In beiden Fällen werden die Toleranzen in dritter Richtung 42 durch die Schrauben 18 ausgeglichen.

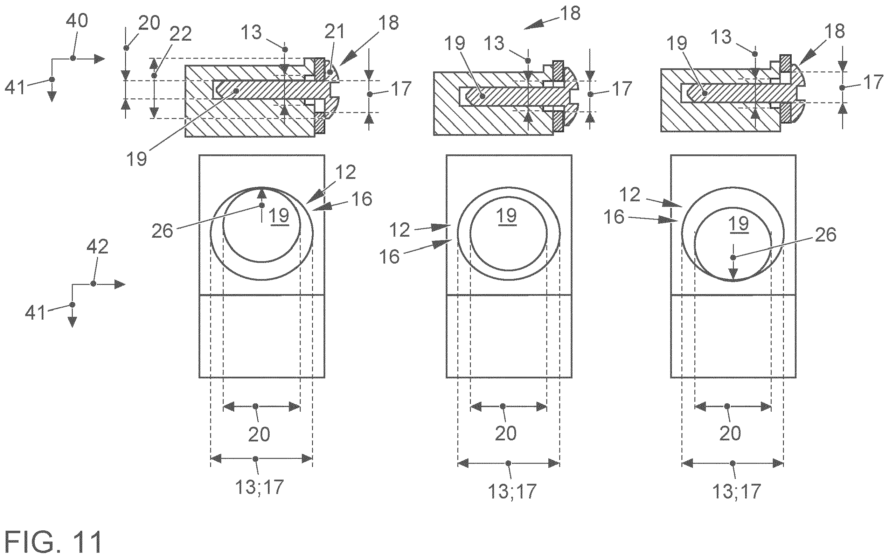

Figur 11 sind zwei Schnittdarstellungen der Bohrungen 12 der elektrischen Kontakte 11 des ersten Bauteils 10 sowie der Bohrungen 16 der elektrischen Kontakte 15 des zweiten Bauteils 14 in drei Szenarien zu sehen. Dabei bildet Figur 11 in der oberen Zeile drei Schnittdarstellungen in erster Richtung 40 und zweiter Richtung 41 ab, während in der unteren Zeile die dazugehörige Schnittdarstellung in zweiter Richtung 41 und dritter Richtung 42 zu sehen ist. Deutlich ist zu sehen, wie die Schrauben 18 mit deren Schraubenschaft 19 in erster Richtung 40 in die Bohrungen eingebracht sind.

Wie in Hinblick auf Figur 10 beschrieben, können die Schrauben 18 Toleranzen in zweiter Richtung 41 ausgleichen, da deren Schaftdurchmesser 20 kleiner als der Durchmesser 13 der Bohrung 12 des ersten Bauteils 10 beziehungsweise kleiner als der Durchmesser 17 der Bohrung 16 des zweiten Bauteils 14 ausgebildet ist. Während das mittlere Szenario wieder die nominale Lage zeigt, zeigt das linke Szenario, wie die Bohrung 12 des ersten Bauteils 10 im Vergleich zur Bohrung 16 des zweiten Bauteils 14 in zweite Richtung 41 nach unten verschoben ist. Im rechten Szenario ist dies andersherum, da die Bohrung 12 des ersten Bauteils 10 im Vergleich zur Bohrung 16 des zweiten Bauteils 14 nach oben verschoben ist. In beiden Fällen werden die Toleranzen in zweiter Richtung 41 durch die Schrauben 18 ausgeglichen. Das mittlere Szenario zeigt die nominale Lage, in der die beiden Bohrungen übereinander liegen.

Deutlich ist in Figur 11 ferner zu sehen, wie der Kopfdurchmesser 22 deutlich größer als der Schaftdurchmesser 20 sowie der Durchmesser 13 der Bohrungen 12 des ersten Bauteils 10 und der Durchmesser 17 der Bohrungen 16 des zweiten Bauteils 14 ist.

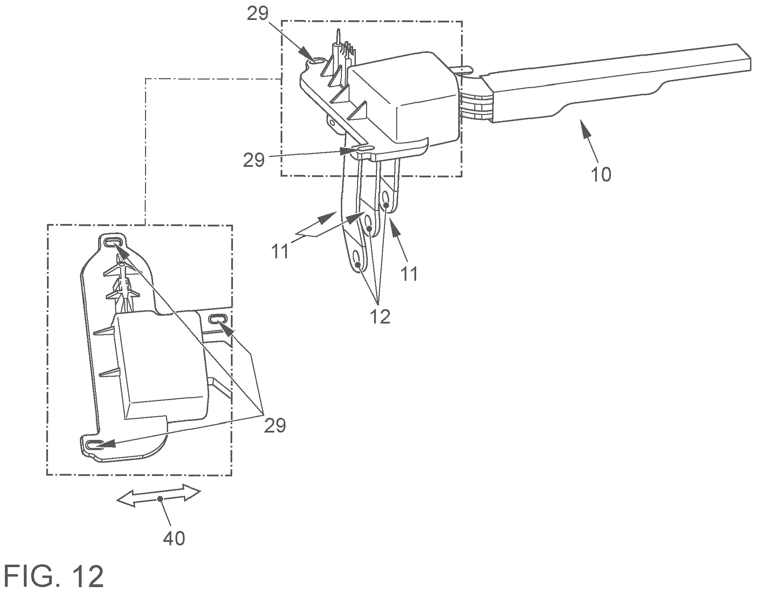

Figur 12 zeigt eine perspektivische Ansicht eines ersten Bauteils 10, wobei das erste Bauteil 10 als AC-Modul ausgebildet ist. Das erste Bauteil 10 weist drei längliche Durchbrechungen 29 auf, die sich, beim Einbau des ersten Bauteils 10 in ein Gehäuse 24, in erster Richtung 40 erstrecken. Die Durchbrechungen 29 sind oval ausgebildet, wobei deren längere Achse in die erste Richtung 40 zeigt. Die Durchbrechungen 29 sind besonders gut in der perspektivischen unteren Detailansicht der Figur 12 zu sehen. Ferner umfasst das erste Bauteil 10 elektrische Kontakte 11, die sich beim Einbau in ein Gehäuse in zweiter Richtung 41 erstrecken. Die elektrischen Kontakte 11 sind ungleich lang ausgebildet. Sie weisen an ihrem freien Ende jeweils eine Bohrung 12 auf. Dabei sind die Kontakte 11 derart abgewinkelt, dass deren Bohrungen 12 auf einer gedachten Kreislinie liegen. Dies dient dem Anschluss an das zweite Bauteil 14, das zylinderförmig ausgebildet sein kann.

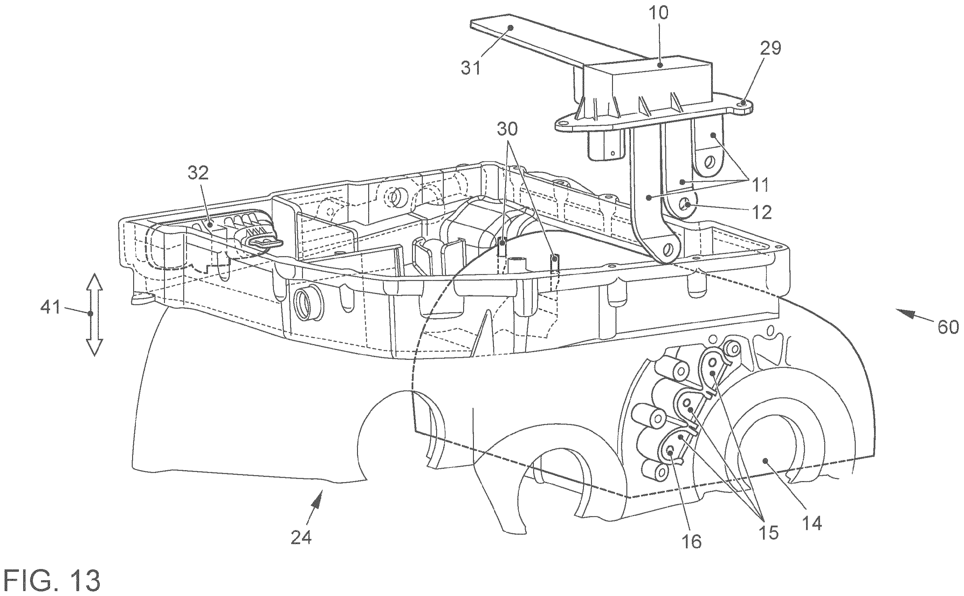

In Figur 13 ist eine perspektivische Ansicht eines elektrischen Antriebs 60 eines Fahrzeuges gezeigt, der ein Gehäuse 24 umfasst, in das Zentrierelemente 30 eingebracht sind. Die Zentrierelemente 30 erstrecken sich in zweiter Richtung 41. Ferner ist in das Gehäuse 24 ein DC-Modul 32 eingebracht. In einem weiteren Schritt wird das erste Bauteil 10, das nach Figur 12 ausgebildet ist, eingebracht. Es wird zunächst in erster Richtung 40 derart verschoben, dass die elektrischen Kontakte 12 des ersten Bauteils 10 und die elektrischen Kontakte 15 des zweiten Bauteils 14 in erster Richtung in unmittelbarer Nähe zueinander angeordnet sind. Nun wird das erste Bauteil 10 in zweiter Richtung 41 abgesenkt. Dabei greifen zuvor eingebrachte Zentrierelemente 30 in entsprechende Durchbrechungen 29 des ersten Bauteils 10.

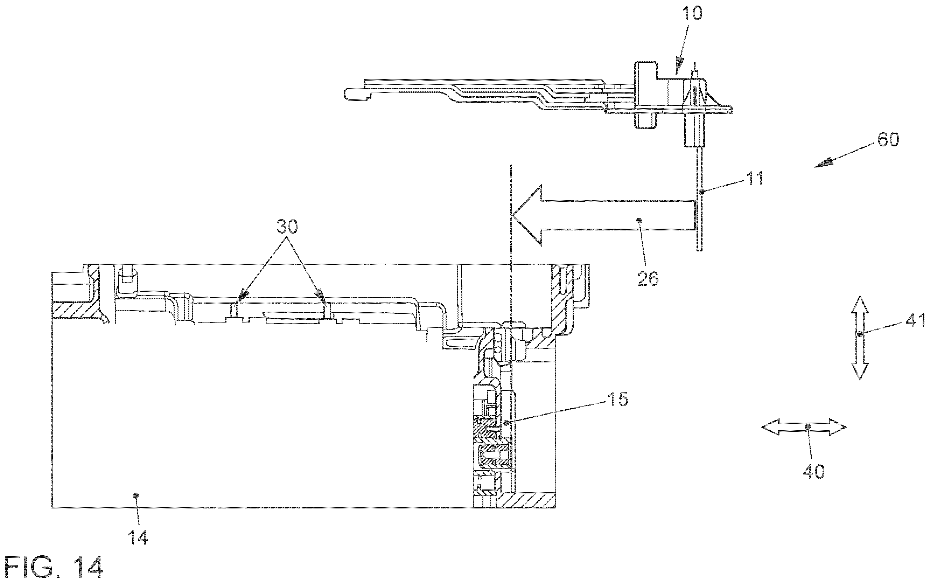

In Figur 14 ist gezeigt, wie das erste Bauteil 10 in erster Richtung 40 entsprechend des Pfeils 26 bewegt wird, bis die elektrischen Kontakte 11 des ersten Bauteils 10 in unmittelbarer Nähe zu den elektrischen Kontakten 15 des zweiten Bauteils 14 liegen. Dabei ist das erste Bauteil 10 in einer perspektivischen Ansicht gezeigt, während das Gehäuse 24 und das zweite Bauteil 14 in einer Schnittdarstellung in erster Richtung 40 und zweiter Richtung 41 gezeigt sind.

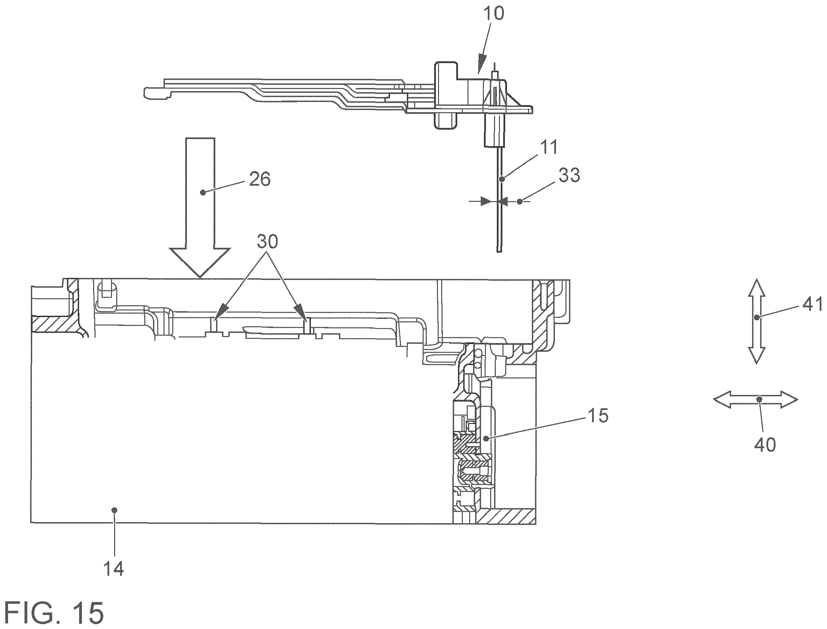

In Figur 15 ist in gleicher Ansicht zu sehen, wie ein Abstand 33 in erster Richtung zwischen den elektrischen Kontakten 11 des ersten Bauteils 10 und den elektrischen Kontakten 15 des zweiten Bauteils 14 hergestellt wurde. Nun wird das erste Bauteil 10 in zweiter Richtung 41 entsprechend des Pfeils 26 verschoben, und zwar bis ein Abstand 34 in zweiter Richtung 41 zwischen dem ersten Bauteil 10 und dem Gehäuse 24 hergestellt ist.

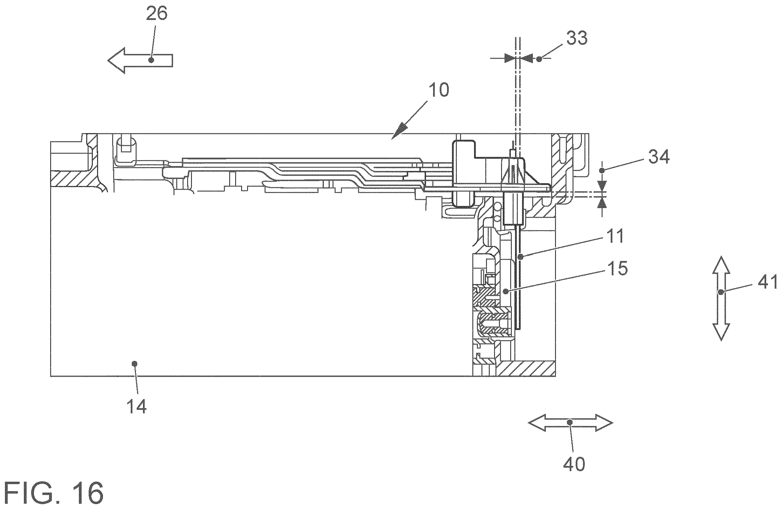

In Figur 16 ist gezeigt, wie nun die elektrischen Kontakte 11 des ersten Bauteils 10 und die entsprechenden Kontakte 15 des zweiten Bauteils 14 einen Abstand 33 in erster Richtung 40 aufweisen, wobei das erste Bauteil 10 einen Abstand 34 in zweiter Richtung 41 zu dem Gehäuse 24 beziehungsweise zu einer entsprechenden Auflagefläche des Gehäuses 24 aufweist. Ferner zeigt Figur 16 nun eine weitere Bewegung entlang des Pfeils 26 des ersten Bauteils 10 in erster Richtung 40, und zwar entlang der Längsrichtung der länglichen Durchbrechungen 29, bis mindestens ein elektrischer Kontakt 11 des ersten Bauteils 10 an mindestens einem elektrischen Kontakt 15 des zweiten Bauteils 14 möglichst spannungsarm anliegt.

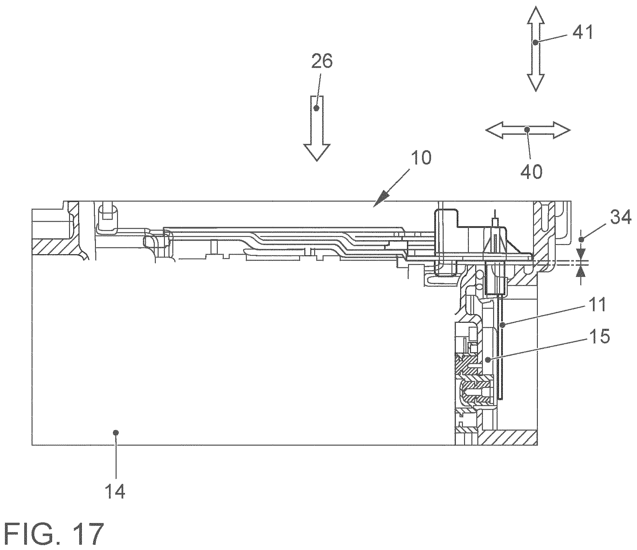

In Figur 17 ist das Resultat der Bewegung der Figur 16 zu sehen, und zwar besteht nun kein Abstand 33 mehr in erster Richtung 40, jedoch noch der Abstand 34 in zweiter Richtung 41. Figur 17 zeigt ferner die nächste Bewegung in zweiter Richtung 41 entlang des Pfeils 26, und zwar bis das erste Bauteil 10 auf entsprechenden Auflageflächen im Gehäuse 24 aufliegt.

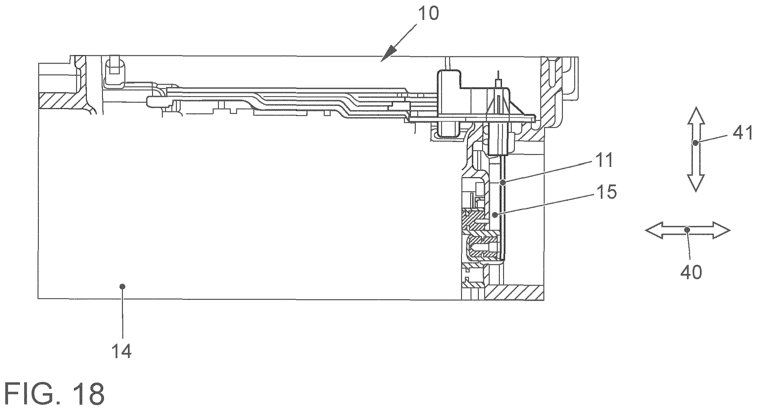

Figur 18 zeigt als Resultat, dass nun kein Abstand 34 in zweiter Richtung 41 mehr besteht. Im Anschluss wird das erste Bauteil 10 über entsprechende Schrauben 18 mit dem Gehäuse 24 fest verschraubt, wobei die Zentrierelemente 30 nicht unbedingt mittig zentriert werden müssen. Sobald das erste Bauteil 10 fest mit dem Gehäuse 24 verbunden ist, werden elektrisch lösbare Verbindungen zwischen den elektrischen Kontakten 11 des ersten Bauteils 10 und den elektrischen Kontakten 15 des zweiten Bauteils 14 hergestellt.

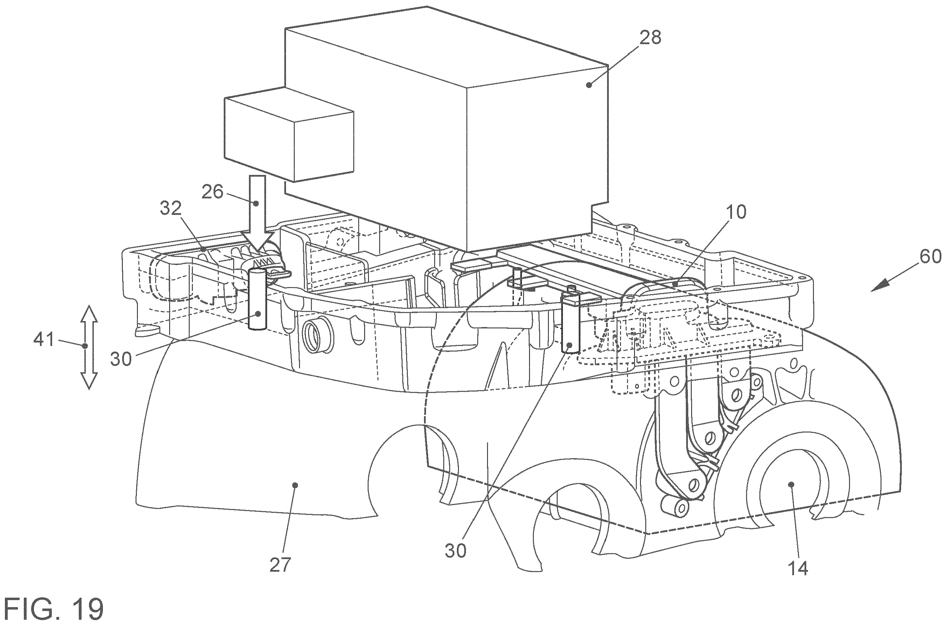

Figur 19 zeigt den elektrischen Antrieb der Figur 13, wobei nun das erste Bauteil 10 wie in den Figuren 14 bis 18 beschrieben eingebracht wurde. Ferner zeigt Figur 19, wie in einem weiteren Schritt ein drittes Bauteil 28, das die gesamte Leistungselektronik umfasst, mittels Zentrierelementen 30 in das Gehäuse eingebracht wird, indem es in zweiter Richtung 41 entsprechend der Pfeile 26 verschoben wird. in diesem Beispiel werden zur Zentrierung des dritten Bauteiles 28 separate Zentrierelemente 30 verwendet. Die Zentrierung kann allerdings auch über dieselben Zentrierelemente 30, die zur Zentrierung des ersten Bauteils 10 verwendet wurden, geschehen.

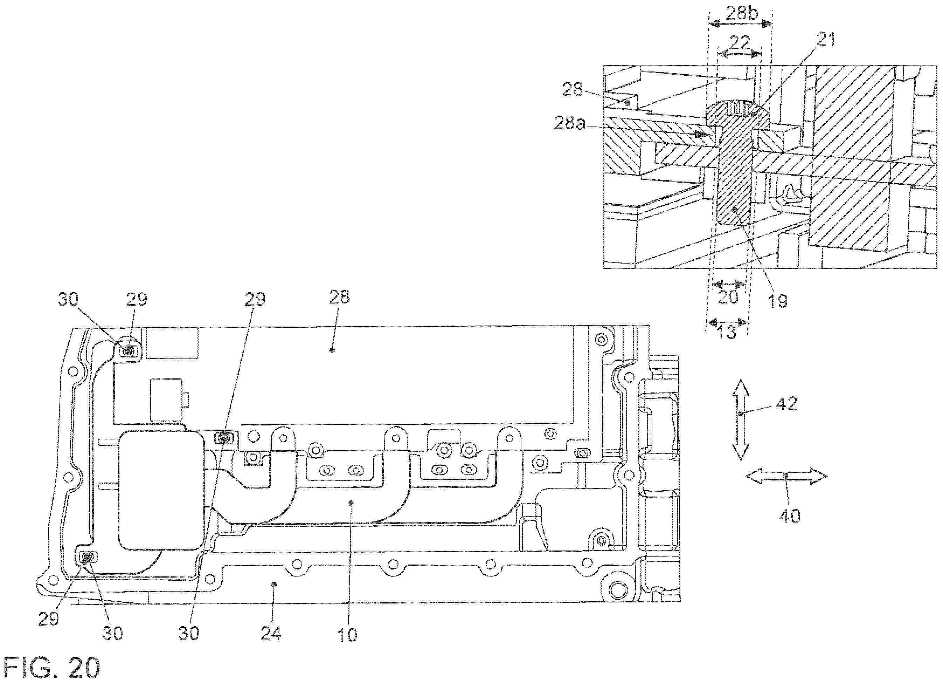

In Figur 20 ist eine Draufsicht auf das dritte Bauteil 28, das erste Bauteil 10 und das Gehäuse 24 des Antriebs 60 der Figur 19 zu sehen, nachdem das dritte Bauteil 28 eingebracht worden ist und eine lösbare Verbindung mit dem Gehäuse 24 hergestellt wurde. Es wird eine lösbare Verbindung und somit ein Toleranzausgleich zwischen dem ersten Bauteil 10 und dem dritten Bauteil 28 durch das Einbringen von Schrauben 18 mit einem Schraubenschaft 19 und einem Schraubenkopf 21 in entsprechende übereinanderliegende Bohrungen 28a des dritten Bauteils 28 und Bohrungen 12 des ersten Bauteils 10 erreicht, wobei ein Toleranzausgleich in erster Richtung 40 und zweiter Richtung 42 erreicht wird, indem die Schrauben 18 einen Schaftdurchmesser 20 aufweisen, der deutlich kleiner ist als der Durchmesser 28b der Bohrungen 28a des dritten Bauteils 28 und der Durchmesser 13 der Bohrungen 12 des ersten Bauteils 10. Dabei ist der Durchmesser 13 der Bohrungen 12 des ersten Bauteils 10 und/oder der Durchmesser 28b der Bohrungen 28a des zweiten Bauteils 14 derart bemessen, dass dieser kleiner ist als ein Kopfdurchmesser 22 der jeweiligen Schraubenköpfe 21. Ferner ist in Figur 20 zu sehen, wie Zentrierelemente 30 in die länglichen Durchbrechungen 29 des ersten Bauteils 10 greifen.

### Bezugszeichenliste

- 10: erstes Bauteil
- 11: elektrischer Kontakt des ersten Bauteils
- 12: Bohrung
- 13: Durchmesser
- 14: zweites Bauteil
- 15: elektrischer Kontakt des zweiten Bauteils
- 16: Bohrung
- 17: Durchmesser
- 18: Schrauben
- 19: Schraubenschaft
- 20: Schaftdurchmesser
- 21: Schraubenkopf
- 22: Kopfdurchmesser
- 23: Abschlussdeckel
- 24: Gehäuse
- 25: erste Strecke
- 26: Pfeil
- 27: Gehäusedeckel
- 28: drittes Bauteil
- 28a: Bohrung
- 28b: Durchmesser
- 29: längliche Durchbrechung
- 30: Zentrierelement
- 32: DC-Modul
- 33: Abstand in erster Richtung
- 34: Abstand in zweiter Richtung

- 40: erste Richtung
- 41: zweite Richtung
- 42: dritte Richtung
- 60: Antrieb

- 100: Verfahren
- 101: Bewegen des ersten Bauteils relativ zum zweiten Bauteil in eine erste Richtung
- 102: Bewegen des ersten Bauteils um eine erste Strecke
- 103: Ermitteln der ersten Strecke durch Ausmessen und/oder eine Kraft/Wegregelung
- 104: Bewegen des ersten Bauteils relativ zum zweiten Bauteil in eine zweite Richtung
- 105: Fixieren des ersten Bauteils relativ zum zweiten Bauteil
- 106: Herstellen einer lösbaren Verbindung
- 107: Einbringen von Schrauben in übereinanderliegende Bohrungen
- 108: Herstellen einer toleranzausgeglichenen Verbindung

## Patentansprüche

1. Verfahren (100) zum Herstellen (108) einer toleranzausgeglichenen Verbindung zwischen einem ersten Bauteil (10) und einem zweiten Bauteil (14),
wobei
das Verfahren (100) ein Bewegen (101) des ersten Bauteils (10) relativ zum zweiten Bauteil (14) in eine erste Richtung (40) umfasst, und zwar wird das erste Bauteil (14) nur solange in erster Richtung bewegt, bis ein Kontakt zwischen den elektrischen Kontakten (11) des ersten Bauteils (14) und den elektrischen Kontakten (15) des zweiten Bauteils (14) hergestellt wird und diese aneinander anliegen,
**dadurch gekennzeichnet, dass**
das Verfahren (100) das Herstellen (106) einer lösbaren Verbindung zwischen den elektrischen Kontakten (11) des ersten Bauteils (10) und den elektrischen Kontakten (15) des zweiten Bauteils (14) umfasst

2. Verfahren (100) nach Anspruch 1,
**dadurch gekennzeichnet, dass**
das erste Bauteil (10) mittels einer Maschine oder manuell bewegt wird.

3. Verfahren (100) nach einem der Ansprüche 1 oder 2,
**dadurch gekennzeichnet, dass**
das erste Bauteil (10) mittels einer Lineareinheit und/oder eines Roboters bewegt wird.

4. Verfahren (100) nach einem der vorangehenden Ansprüche,
**dadurch gekennzeichnet, dass**
das erste Bauteil (10) um eine erste Strecke (25) bewegt wird (102), und zwar bis die elektrischen Kontakte (11) des ersten Bauteils (10) an den elektrischen Kontakten (15) des zweiten Bauteils (14) anliegen,
wobei die erste Strecke (25) durch Ausmessen und/oder eine Kraft/Wegregelung und/oder akustisch und/oder durch die Ermittlung eines elektrischen Übergangswiderstandes ermittelt wird (103).

5. Verfahren (100) nach einem der vorangehenden Ansprüche,
**dadurch gekennzeichnet, dass**
das Verfahren (100) ein Bewegen (104) des ersten Bauteils (10) relativ zum zweiten Bauteil (14) in eine zweite Richtung (41) umfasst, und zwar bis mindestens eine Bohrung (12) des ersten Bauteils (10) über mindestens einer Bohrung (16) des zweiten Bauteils (14) liegt,
wobei die zweite Richtung (41) senkrecht zur ersten Richtung (40) steht.

6. Verfahren (100) nach Anspruch 1,
**dadurch gekennzeichnet, dass**
das Verfahren (100) das Einbringen (107) von Schrauben (18) in die übereinanderliegenden Bohrungen des ersten Bauteils (10) und des zweiten Bauteils (14) umfasst.

7. Verfahren (100) nach Anspruch 6,
**dadurch gekennzeichnet, dass**
ein Durchmesser (13) der mindestens einen Bohrung (12) des ersten Bauteils (10) und/oder ein Durchmesser (17) der mindestens einen Bohrung (16) des zweiten Bauteils (14) größer ausgebildet ist als ein Schaftdurchmesser (20) der Schrauben (18).

8. Verfahren (100) nach Anspruch 7,
**dadurch gekennzeichnet, dass**
der Durchmesser (13) der mindestens einen Bohrung (12) des ersten Bauteils (10) und/oder der Durchmesser (17) der mindestens einen Bohrung (16) des zweiten Bauteils (14) mindestens dem 1,15-Fachen des Schaftdurchmesser (20) der Schrauben (18) entspricht.

9. Verfahren (100) nach einem der Ansprüche 1, 7 oder 8,
**dadurch gekennzeichnet, dass**
ein Durchmesser (13) der mindestens einen Bohrung (12) des ersten Bauteils (10) und/oder ein Durchmesser (17) der mindestens einen Bohrung (16) des zweiten Bauteils (14) kleiner ausgebildet ist als ein Kopfdurchmesser (22) eines Schraubenkopfes (21) der Schrauben (18).

10. Elektrischer Antrieb umfassend ein erstes Bauteil (10) und ein zweites Bauteil (14),
**dadurch gekennzeichnet, dass**
zwischen dem ersten Bauteil (10) und dem zweiten Bauteil (14) eine toleranzausgeglichene Verbindung nach einem Verfahren (100) der Ansprüche 1 bis 9 hergestellt ist.

11. Elektrischer Antrieb nach Anspruch 10,
**dadurch gekennzeichnet, dass**
das erste Bauteil (10) mindestens eine längliche Durchbrechung (29) zum Führen des Bauteils (10) in erster Richtung (40) aufweist.

## Claims

1. Method (100) for producing (108) a tolerance-compensated connection between a first component (10) and a second component (14),
the method (100) comprising a movement (101) of the first component (10) relative to the second component (14) in a first direction (40) and, specifically, the first component (14) being moved in the first direction only until contact between the electrical contacts (11) of the first component (14) and the electrical contacts (15) of the second component (14) is established and they rest against one another,
**characterized in that**
the method (100) comprises producing (106) a releasable connection between the electrical contacts (11) of the first component (10) and the electrical contacts (15) of the second component (14).

2. Method (100) according to claim 1,
**characterized in that**
the first component (10) is moved by means of a machine or manually.

3. Method (100) according to either claim 1 or claim 2,
**characterized in that**
the first component (10) is moved by means of a linear unit and/or a robot.

4. Method (100) according to any of the preceding claims,
**characterized in that**
the first component (10) is moved (102) along a first distance (25), specifically until the electrical contacts (11) of the first component (10) rest against the electrical contacts (15) of the second component (14),
the first distance (25) being determined (103) by measuring and/or force/path control and/or acoustically and/or by determining an electrical contact resistance.

5. Method (100) according to any of the preceding claims,
**characterized in that**
the method (100) comprises a movement (104) of the first component (10) relative to the second component (14) in a second direction (41), specifically until at least one bore (12) of the first component (10) is superposed above at least one bore (16) of the second component (14),
the second direction (41) being perpendicular to the first direction (40).

6. Method (100) according to claim 1,
**characterized in that**
the method (100) comprises introducing (107) screws (18) into the mutually superposed bores of the first component (10) and the second component (14).

7. Method (100) according to claim 6,
**characterized in that**
a diameter (13) of the at least one bore (12) of the first component (10) and/or a diameter (17) of the at least one bore (16) of the second component (14) is greater than a shaft diameter (20) of the screws (18).

8. Method (100) according to claim 7,
**characterized in that**
the diameter (13) of the at least one bore (12) of the first component (10) and/or the diameter (17) of the at least one bore (16) of the second component (14) corresponds to at least 1.15 times the shaft diameter (20) of the screws (18).

9. Method (100) according to any of claims 1, 7 or 8,
**characterized in that**
a diameter (13) of the at least one bore (12) of the first component (10) and/or a diameter (17) of the at least one bore (16) of the second component (14) is smaller than a head diameter (22) of a screw head (21) of the screws (18).

10. Electric drive comprising a first component (10) and a second component (14),
**characterized in that**
a tolerance-compensated connection is produced between the first component (10) and the second component (14) in accordance with a method (100) according to claims 1 to 9.

11. Electric drive according to claim 10,
**characterized in that**
the first component (10) has at least one elongate opening (29) for guiding the component (10) in the first direction (40).

## Revendications

1. Procédé (100) permettant l'établissement (108) d'une liaison compensée en termes de tolérance entre un premier composant (10) et un second composant (14),
dans lequel
le procédé (100) comprend un déplacement (101) du premier composant (10) par rapport au second composant (14) dans une première direction (40), à savoir le premier composant (14) n'est déplacé dans la première direction que jusqu'à ce qu'un contact soit établi entre les contacts électriques (11) du premier composant (14) et les contacts électriques (15) du second composant (14) et que ceux-ci reposent les uns sur les autres,
**caractérisé en ce que**
le procédé (100) comprend l'établissement (106) d'une liaison amovible entre les contacts électriques (11) du premier composant (10) et les contacts électriques (15) du second composant (14).

2. Procédé (100) selon la revendication 1,
**caractérisé en ce que**
le premier composant (10) est déplacé au moyen d'une machine ou manuellement.

3. Procédé (100) selon l'une des revendications 1 ou 2,
**caractérisé en ce que**
le premier composant (10) est déplacé au moyen d'une unité linéaire et/ou d'un robot.

4. Procédé (100) selon l'une des revendications précédentes,
**caractérisé en ce que**
le premier composant (10) est déplacé (102) d'une première distance (25), à savoir jusqu'à ce que les contacts électriques (11) du premier composant (10) reposent sur les contacts électriques (15) du second composant (14),
dans lequel la première distance (25) est déterminée (103) par mesure et/ou une régulation de force/course et/ou de manière acoustique et/ou par la détermination d'une résistance électrique de contact.

5. Procédé (100) selon l'une des revendications précédentes,
**caractérisé en ce que**
le procédé (100) comprend un déplacement (104) du premier composant (10) par rapport au second composant (14) dans une seconde direction (41), à savoir jusqu'à ce qu'au moins un alésage (12) du premier composant (10) se trouve au-dessus d'au moins un alésage (16) du second composant (14),
dans lequel la seconde direction (41) est perpendiculaire à la première direction (40).

6. Procédé (100) selon la revendication 1,
**caractérisé en ce que**
le procédé (100) comprend l'introduction (107) de vis (18) dans les alésages situés les uns au-dessus des autres du premier composant (10) et du second composant (14).

7. Procédé (100) selon la revendication 6,
**caractérisé en ce que**
un diamètre (13) de l'au moins un alésage (12) du premier composant (10) et/ou un diamètre (17) de l'au moins un alésage (16) du second composant (14) sont conçus de manière à être supérieurs à un diamètre de tige (20) des vis (18).

8. Procédé (100) selon la revendication 7,
**caractérisé en ce que**
le diamètre (13) de l'au moins un alésage (12) du premier composant (10) et/ou le diamètre (17) de l'au moins un alésage (16) du second composant (14) correspondent au moins à 1,15 fois le diamètre de tige (20) des vis (18).

9. Procédé (100) selon l'une des revendications 1, 7 ou 8,
**caractérisé en ce que**
un diamètre (13) de l'au moins un alésage (12) du premier composant (10) et/ou un diamètre (17) de l'au moins un alésage (16) du second composant (14) sont conçus de manière à être inférieurs à un diamètre de tête (22) d'une tête de vis (21) des vis (18).

10. Entraînement électrique comprenant un premier composant (10) et un second composant (14),
**caractérisé en ce que**
entre le premier composant (10) et le second composant (14), une liaison compensée en termes de tolérance est établie selon un procédé (100) des revendications 1 à 9.

11. Entraînement électrique selon la revendication 10,
**caractérisé en ce que**
le premier composant (10) présente au moins une percée longitudinale (29) pour le guidage du composant (10) dans la première direction (40).
